# EUROPEAN PATENT SPECIFICATION

(11) **EP 3 010 862 B1**
(45) Date of publication and mention of the grant of the patent: **01.09.2021**
(21) Application number: 14741384.3
(22) Date of filing: 12.06.2014
(51) Int. Cl.: C02F 3/00, G05B 13/02, C02F 3/26

(54) **METHOD AND APPARATUS FOR CONTROLLING A PROCESS OF BIOLOGICAL TREATMENT OF WASTEWATER OF CIVIL ORIGIN**
VERFAHREN UND VORRICHTUNG ZUR STEUERUNG EINES PROZESSES ZUR BIOLOGISCHEN BEHANDLUNG VON ABWASSER ZIVILEN URSPRUNGS
PROCÉDÉ ET APPAREIL POUR LA COMMANDE D'UN PROCÉDÉ DE TRAITEMENT BIOLOGIQUE D'EAUX USÉES D'ORIGINE CIVILE

(30) Priority: 17.06.2013 IT RM20130346
(43) Date of publication of application: 27.04.2016
(73) Proprietor: Chemitec S.r.l., 50018 Scandicci (FI) (IT)
(72) Inventor: CATELANI, Filippo, I-50018 Scandicci (FI) (IT); BORGATO, Matteo Maria, I-50018 Scandicci (FI) (IT)
(74) Representative: Scilletta, Andrea
(86) International application number: PCT/IB2014/062166
(87) International publication number: WO 2014/203127

(56) References cited:
- EP-A1- 1 598 712
- US-A- 5 589 068
- US-A1- 2008 314 841
- US-A1- 2010 187 173
- US-A1- 2010 303 695

## Description

The present invention relates to a method and an apparatus for controlling a wastewater biological treatment plant, as well as the plant provided with such apparatus, allowing in a simple, reliable, efficient and inexpensive way to automate and optimise the process of biological oxidation in a plant for purifying and treating wastewater, in particular of civil origin, minimising its consumption of electrical energy and, consequently, the management costs, the method and the apparatus being applicable to even already existing plants of any size, even small, and particularly resulting advantageous for plants which are poorly instrumented and/or poorly automated and/or not attended by human operators. In particular, the apparatus according to the invention is also simple to make, install and maintain, thus also reducing the related costs.

It is known that, in purification processes carried out in suitable civil plants, oxidation is an extremely important step of the process of wastewater biological treatment. In fact, in such step, along with the abatement of the organic load, the ammonium ions (NH₄+) and the nitrite ions (NO₂-) present in the wastewaters are transformed in nitrate ions (NO₃-), less harmful to the environment and life forms of the receiving body in which the water is poured out of the purification plant. For the biological dynamics in progress, the concentration of the ammonium ion (NH₄+) and that of the nitrite ion (NO₂-) in the water of the oxidation tank during the same oxidation have a pattern opposite to the concentration of the nitrate ion (NO₃-).

The transformation (that is also called nitrification) is carried out by aerobic bacteria in a suitable oxidation tank, wherein the bacteria, hosted in sludges which are kept in suspension in the wastewater to treat, oxidise the ammonium and nitrite ions by using oxygen that is continuously supplied to the tank through air or oxygen (O₂) dispensers, optionally arranged in proximity of or on the bottom of the oxidation tank. Therefore, the control of the oxygen dissolved in tank is fundamental for guaranteeing to bacteria the appropriate conditions of life and hence an efficient transformation of the chemical species.

Similarly to nitrification, in order to remove or eliminate the ionic species of nitrogen, use is made of a different step of biological treatment, called denitrification, where the acting bacteria are active strains under anaerobic conditions, which obtain the oxygen necessary to their life cycle from the oxidised forms of nitrogen, simultaneously reducing it down to gaseous nitrogen, that gets lost in the atmosphere. Such step is, when present, mainly placed before oxidation (pre-denitrification) in a suitable tank, and/or, in other cases after the same, mainly depending on the organic load available to the livelihood of existing bacteria. Other configurations include alternating the steps of oxidation (nitrification) and reduction (denitrification) in a sole tank, provided with appropriate shakers for keeping the biological sludges in suspension.

Prior art plants are usually provided with measurement systems having oxygen probes immersed in the oxidation tank for checking the presence of oxygen and controlling oxygenation of tanks through pumps (driven by respective electric motors) which activate blowing of air or oxygen in tank from the dispensers.

However, prior art plants suffer from some drawbacks due to an inefficient management of the oxygen dissolved in tank.

In fact, the oxygenation through blowing of air or oxygen in tank is generally controlled in an approximate way, often providing a larger oxygen amount than the one really necessary at a certain instant for the oxidation step that is not related to the real load conditions. This entails a not justified consumption of electrical energy and hence an increase of the management costs.

In order to overcome such drawback, some solutions have been developed in the prior art which propose methods and apparatuses for controlling oxygenation in order to reduce the consumption of electrical energy, as disclosed in documents DE4330569 C1, EP1376276 A1, EP1598712 A1, JPH1085752 A and WO03035554 A2.

However, such solutions are particularly complex, entail high costs of manufacture, installation and management, and hence economically justifiable only in large size plants.

It is an object of this invention, therefore, to allow in a simple, reliable, efficient and inexpensive way to automate and optimise the process of oxidation in a plant for purifying and treating wastewater, in particular of civil origin, so as to minimise its consumption of electrical energy and, consequently, the management costs.

It is another object of this invention to allow such a minimisation of consumption of electrical energy in even already existing plants of any size, also small, and even in plants which are poorly instrumented and/or poorly automated and/or not attended by human operators.

It is specific subject-matter of the present invention a method for controlling a wastewater biological treatment plant according to claim 1.

Further embodiments of the method according to the invention are defined in dependent claims 2 to 10.

It is still specific subject-matter of the present invention an apparatus controlling a wastewater biological treatment plant according to claim 11.

Other embodiments of the apparatus according to the invention are defined in dependent claims 12 to 14.

It is also specific subject-matter of the present invention a wastewater biological treatment plant according to claim 15.

The method executed by the electronic control unit of the apparatus according to the invention is based on a detection of the oxygenation quality, provided by at least one value indicative of the concentration of at least one among ammonium ion (NH₄+), nitrite ion (NO₂-) and nitrate ion (NO₃-) in the water of the oxidation tank and on values indicative of the oxygen concentration (O₂). In this way, the method according to the invention is capable to control the same oxygenation of the tank through the optimised activation of one or more (electrically driven) pumps which activate the blowing of air or oxygen in tank by dispensers, minimising the electric consumptions.

In other words, the operation logic of the apparatus according to the invention assigns, in the first approximation, the detection of the actual variation of the load (i.e. concentration of substances to abate) to the detection of the variation of the ammonium ion (NH₄+) (and/or of the nitrite ion NO₂- and/or of the nitrate ion NO₃-). This occurs, in the first approximation, for waste of civil origin.

Advantages offered by the method, the apparatus and the plant according to the invention are evident.

First of all, the consumption of electrical energy is significantly reduced.

Moreover, the invention allows the automation and optimisation of the oxidation process also in wastewater purification and treatment plants of small size, even when already existing, and even in plants which are poorly instrumented and/or poorly automated and/or not attended by human operators,

Furthermore, the method according to the invention permits to manage in an intelligent way the oxygenation process, through air or oxygen blowing, optimising in an efficient way (through a processing that is non-fuzzy, and not even according to any other artificial intelligence algorithm, rather through a deterministic algorithm) the oxygen amount present in tank and thus reducing the consumption of electrical energy and the consequent costs.

Also, the apparatus according to the invention is simple to manufacture, install and manage, reducing the related costs.

The present invention will be now described, by way of illustration and not by way of limitation, according to its preferred embodiments, by particularly referring to the Figures of the annexed drawings, in which:
Figure 1 shows a schematic view of a preferred embodiment of the purification plant according to the invention;
Figure 2 shows a graph related to a first operating mode of the apparatus installed in the plant of Figure 1;
Figure 3 shows a graph related to a second operating mode of the apparatus installed in the plant of Figure 1; and
la Figure 4 shows a graph related to a third operating mode of the apparatus installed in the plant of Figure 1.

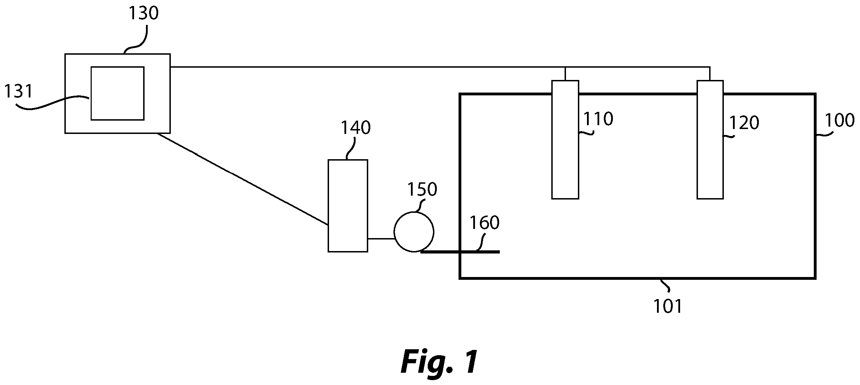

In the Figures identical reference numerals will be used for alike elements With reference to Figure 1, it may be observed that a preferred embodiment of the purification plant according to the invention comprises an oxidation tank 100 configured to contain the wastewater to treat in which the sludges hosting the aerobic bacteria are kept in suspension.

The oxidation tank 100 is provided with a first probe 110 configured to measure the concentration of the ammonium ion (NH₄+) in the wastewater to treat. Optionally, the first probe 110 is of electrochemical type with ion-selective electrode (like the S470 Process ISE Sensor probe available from the Chemitec s.r.l. company and described in the web page at the address http://www.chemitec.it/images/Chemitec%20S470%20Sonda_Italiano.pdf).

Similarly, a second probe 120 configured to measure the concentration of oxygen dissolved in the waterto treat is arranged in the oxidation tank 100. Optionally, the second probe 120 is of optical luminescence type (like the S423/C/OPT probe still available from the Chemitec s.r.l. company and described in the web page at the address http://www.chemitec.it/images/prodotti/oxygen/sonde/S423-C-OPT.pdf). Still optionally, the second probe 120 is further provided with a temperature sensor that provides a detection of the temperature of the water to treat, in order to allow a compensation of the optical detection as a function of water temperature; alternatively, the temperature sensor may be separated from the second probe 120 and advantageously mounted in proximity of the second probe 120.

It must be understood that the specific technology of the first and second probes 110 and 120 are not an essential feature of the invention; in particular, the second probe 120 may be also an electrochemical sensor, such as for instance a Clark sensor, and it may be also not associated to a temperature sensor.

The first and second probes 110 and 120 are part of a preferred embodiment of the plant according to the invention, but they are not essential features of the apparatus according to the invention installed in the plant of Figure 1. The apparatus according to the invention comprises an electronic control unit 130 to which the first and second probes 110 and 120 are connected, through wired and/or wireless connection. The electronic control unit 130 is configured to receive the detection signals from the first and second probes 110 and 120.

Moreover, the electronic control unit 130 is connected, through wired and/or wireless connection, to one or more electrical apparatuses 140 which control the power supply to one or more respective electric motors for driving respective pumps 150 which activate the blowing of air or oxygen in tank by dispensers 160, optionally arranged in proximity of or on the bottom 101 of the oxidation tank 100. The electrical apparatuses 140 may be of any type, for instance inverter. In particular, the electronic control unit 130 is configured to control the power supply electrical apparatuses 140 (which are not part of the apparatus according to the invention).

The electronic control unit 130 is configured to execute a preferred embodiment of the method according to the invention that, on the basis of the detection signals received from the first and second probes 110 and 120, control in an optimised and automatic way the oxygenation of the oxidation tank 100 and, consequently, the oxidation process. In particular, such method dynamically generates a setpoint (i.e. a target value) of the oxygen concentration such that this setpoint is variable as a function of the concentration of the ammonium ion (NH₄+) in the wastewater to treat in the oxidation tank 100; the electronic control unit 130 is configured to control the power supply electrical apparatuses 140 so as to drive the respective pumps 150 for making the dispensers 160 supply air or oxygen so as to make the actual dissolved oxygen concentration detected by the second probe 120 tend to the setpoint. Therefore, the method according to the invention allows to efficiently manage the aeration process by dynamically adapt it to the time variations of concentration of the ammonium ion (NH₄+) originated by the time variations of concentration of the polluting substances due to the domestic anthropogenic activities related to the use of water that is then conveyed towards the purification plant (as known, these domestic anthropogenic activities are concentrated in certain daytime slots).

In order to better understand the operation of the apparatus and plant according to the invention, and hence the steps of the method executed by the electronic control unit 130 of the apparatus, the following illustrates the three operating modes according to which the preferred embodiment of the method executed by the apparatus installed in the plant of Figure 1 operates; such three operating modes are optionally selectable through an input/output interface 131 with which the electronic control unit 130 is provided, and that optionally includes a display configured to display information on the operation of the same electronic control unit 130 (e.g., the concentration values detected by the first and second probes 110 and 120 and the current operation mode) and a keypad through which an operator may input data and/or require displaying of information on the display.

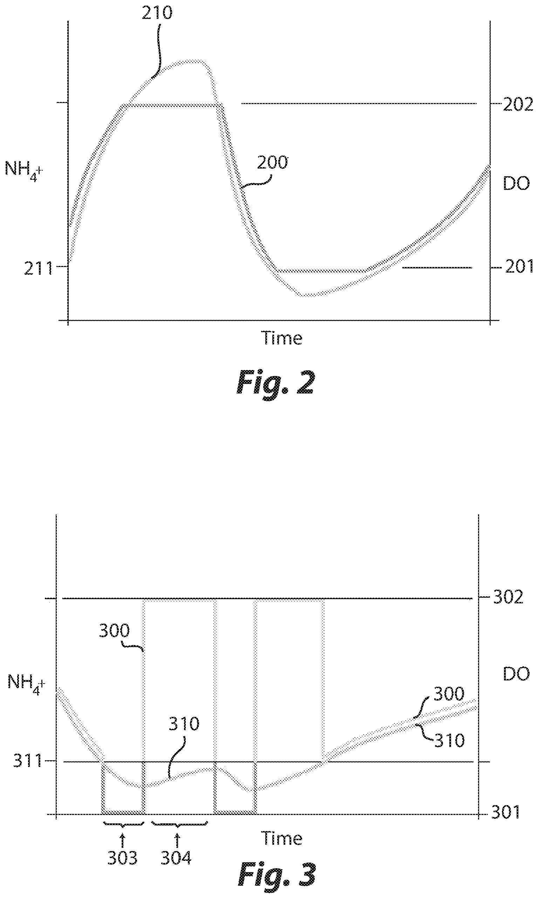

Figure 2 shows a graph related to a first operating mode and comprising the patterns of the setpoint 200 of the oxygen concentration (to which setpoint the actual dissolved oxygen concentration detected by the second probe 120 tends, i.e. to which setpoint the actual dissolved oxygen concentration detected by the second probe 120 is equated or tries to get or reaches) and of the concentration 210 of the ammonium ion (NH₄+) detected by the first probe 110. In particular, the electronic control unit 130 controls the power supply electrical apparatuses 140 so as to regulate the respective pumps 150 for adapting the oxygenation to an increase of concentration 210 of the ammonium ion (NH₄+) over a first adjustment threshold value 211; when, instead, the concentration 210 of the ammonium ion (NH₄+) is lower (or even not larger) than the first adjustment threshold value 211, the electronic control unit 130 controls the power supply electrical apparatuses 140 so as to drive the respective pumps 150 for maintaining a "static" condition of oxygenation.

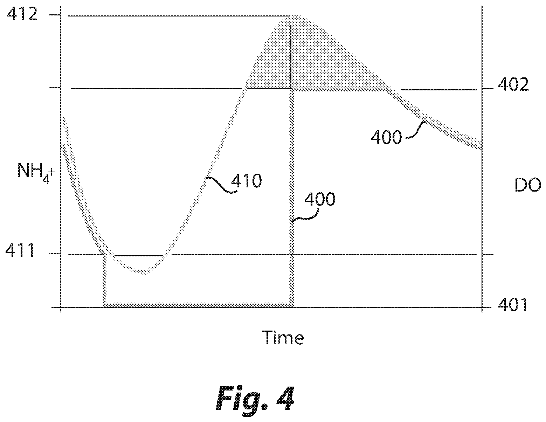

It must be understood that the power supply electrical apparatuses 140 are not necessarily controlled so as to drive the respective pumps 150 for making the dispensers 160 deliver an air or oxygen flow having fixed discharge, but they can be controlled so as to adjust the discharge of the air or oxygen flow delivered by the dispensers 160 on the basis of the value of oxygen concentration detected by the second probe 120 and of the related setpoint 200; this is valid also for the second and third operating modes described later. Moreover, in Figure 2 the patterns of the setpoint 200 of the dissolved oxygen concentration and of the concentration 210 of the ammonium ion (NH₄+) are shown by way of pure example, and the respective scales may differ from each other by a proportionality constant; this is valid also for the similar patterns shown in Figure 3 and Figure 4.

In greater detail, it may be observed that such first operating mode manages the oxygenation so that, when the concentration 210 of ammonium ion (NH₄+) is lower than the first adjustment threshold value 211, the pumps 150 are driven to supply air or oxygen so as to keep the setpoint 200 of the oxygen concentration (controlled on the basis of the actual concentration detected by the second probe 120) equal to a first minimum value 201. When the concentration 210 of ammonium ion (NH₄+) exceeds the first adjustment threshold value 211, the pumps 150 are driven for delivering air or oxygen so as to follow the setpoint 200 of the oxygen concentration that increases proportionally to the concentration 210 of ammonium ion (NH₄+), the value of the setpoint 200 not exceeding a first maximum value 202.

In other words, when the concentration 210 of ammonium ion (NH₄+) falls below the first adjustment threshold value 211, that is optionally settable (i.e. adjustable) by an operator through the interface 131 of the electronic control unit 130, the setpoint 200 of the oxygen concentration is kept equal to the first minimum value 201, that is also optionally settable by an operator through the interface 131 of the electronic control unit 130. When the concentration 210 of ammonium ion (NH₄+) rises, the setpoint 200 of the oxygen concentration varies proportionally to the concentration 210 of ammonium ion (NH₄+) without exceeding the first maximum value 202, that is also optionally settable by an operator through the interface 131 of the electronic control unit 130; in particular, even if the concentration 210 of ammonium ion (NH₄+) keeps rising after that the setpoint 200 of the oxygen concentration has reached such first maximum value 202, the setpoint 200 of the oxygen concentration remains constant.

Figure 3 shows a graph related to a second operating mode of the preferred embodiment of the method executed by the electronic control unit 130 of the apparatus installed in the plant of Figure 1. In particular, the graph of Figure 3 comprises the patterns of the setpoint 300 of the oxygen concentration (to which setpoint the actual dissolved oxygen concentration detected by the second probe 120 tends) and of the concentration 310 of ammonium ion (NH₄+) detected by the first probe 110.

Such second operating mode manages the oxygenation so that, when the concentration 310 of ammonium ion (NH₄+) is lower than a second adjustment threshold value 311 (possibly equal to the first adjustment threshold value 211 shown in Figure 2), the electronic control unit 130 controls the power supply electrical apparatuses 140 so as to drive the respective pumps 150 according to ON-OFF cycles of oxygenation, wherein the setpoint 300 of the oxygen concentration varies according to a periodic square wave between a second minimum value 301, optionally lower than the first minimum value 201 shown in Figure 2, more optionally equal to 0 (zero), for a first time interval 303 (OFF interval), and a second maximum value 302, optionally equal to the first maximum value 202 shown in Figure 2, for a second time interval 304 (ON interval) optionally shorter than the first time interval 303; obviously, the square wave period is equal to the sum of the first and second time interval 303 and 304. At least one among the second adjustment threshold value 311, the second minimum value 301 and the second maximum value 302 is optionally settable by an operator through the interface 131 of the electronic control unit 130. Moreover, at least one among the OFF interval 303 and the ON interval 304 is optionally settable by an operator through the interface 131 of the electronic control unit 130; alternatively, at least two among the OFF interval 303, the ON interval 304, and the square wave period are optionally settable by an operator through the interface 131 of the electronic control unit 130. Also the second minimum value 301 is optionally settable by an operator through the interface 131 of the electronic control unit 130.

Instead, when the concentration 310 of ammonium ion (NH₄+) exceeds (or it is even not lower than) the second adjustment threshold value 311, the electronic control unit 130 controls the power supply electrical apparatuses 140 so as to drive the respective pumps 150 for supplying air or oxygen so as to follow the setpoint 300 of the oxygen concentration that increases proportionally to the concentration 310 of ammonium ion (NH₄+), the value of the setpoint 300 not exceeding the second maximum value 302 (or, alternatively, a third maximum value, different from the second maximum value 302, also optionally settable by an operator).

In other words, the second operating mode manages the oxygenation process according to ON-OFF cycles adaptively to the actual conditions of concentration of polluting substances. In fact, only when the concentration 310 of ammonium ion (NH₄+) falls below the second adjustment threshold value 311 the air or oxygen supply is interrupted for an OFF interval 303 and it is then reactivated for the ON interval 304; this allows to hinder the sedimentation and compaction of the sludges present in tank, simultaneously guaranteeing a significant reduction of the energy consumption. Such second operating mode executes the ON-OFF cycles of oxygenation until the concentration 310 of ammonium ion (NH₄+) exceeds the second adjustment threshold value 311, and in this case the setpoint 300 of oxygen concentration returns to vary with the concentration 310 of ammonium ion (NH₄+) without exceeding the second maximum value 302.

Figure 4 shows a graph related to a third operating mode of the preferred embodiment of the method executed by the electronic control unit 130 of the apparatus installed in the plant of Figure 1. In particular, the graph of Figure 4 comprises the patterns of the setpoint 400 of the oxygen concentration (to which setpoint the actual dissolved oxygen concentration detected by the second probe 120 tends) and of the concentration 410 of ammonium ion (NH₄+) detected by the first probe 110.

Such third operating mode manages the oxygenation so that, when the concentration 410 of ammonium ion (NH₄+) is lower (or even not larger) than an interruption threshold value 411 (possibly equal to the first adjustment threshold value 211 shown in Figure 2 or to the second adjustment threshold value 311 shown in Figure 3), the electronic control unit 130 controls the power supply electrical apparatuses 140 so as to interrupt the oxygenation, whereby the setpoint 300 of the oxygen concentration is equal to a third minimum value 401, optionally lower than the first minimum value 201 shown in Figure 2, more optionally equal to 0 (zero); optionally, at least one among the interruption threshold value 411 and the third minimum value 401 is settable by an operator through the interface 131 of the electronic control unit 130.

Afterwards, the electronic control unit 130 keeps the setpoint 400 of the oxygen concentration equal to the third minimum value 401 until the concentration 410 of ammonium ion (NH₄+) exceeds an activation threshold value 412, larger than the interruption threshold value 411, optionally larger than the first adjustment threshold value 211 shown in Figure 2 and/or than the second adjustment threshold value 311 shown in Figure 3. When the concentration 410 of ammonium ion (NH₄+) exceeds (or it is even not lower than) the activation threshold value 412, the electronic control unit 130 controls the power supply electrical apparatuses 140 so as to drive the respective pumps 150 for supplying air or oxygen so as to follow the setpoint 400 of the oxygen concentration that has a value proportional to the concentration 410 of ammonium ion (NH₄+), the value of the setpoint 400 not exceeding a fourth maximum value 402 (optionally equal to the first or second or third maximum value); in such conditions, when the concentration 410 of ammonium ion (NH₄+) exceeds the activation threshold value 412, the electronic control unit 130 generates the setpoint 400 equal to the fourth maximum value 402 and afterwards, when the concentration 410 of ammonium ion (NH₄+) decreases, the setpoint 400 of the oxygen concentration decreases proportionally to the concentration 410 of ammonium ion (NH₄+). Optionally, at least one between the activation threshold value 412 and the fourth maximum value 402 is settable by an operator through the interface 131 of the electronic control unit 130.

In particular, the third operating mode is advantageously applicable to the case of a purification plant wherein the oxidation step and the denitrification step occur in the same tank. In this case, the increase of the concentration of ammonium ion (NH₄+) is due to the prevalence of the biological activity of anaerobic bacteria strains which reduce the nitrite ion (NO₂-) and the nitrate ion (NO₃-) to gaseous molecular nitrogen N₂ (and usually other gases containing nitrogen, such as dinitrogen oxide N₂O), simultaneously increasing the concentration of ammonium ion (NH₄+) as intermediate product. As stated, this permits the reduction of the content of nitrogen in water, putting it back in atmosphere, thus contributing to keeping low amounts of total nitrogen present in purified water that is finally poured in the receiving body. Such situation requires compatible volumes, besides the presence of electromechanical equipment dedicated to keeping the sludges containing the aerobic and anaerobic bacteria in suspension. Obviously, when the concentration 410 of ammonium ion (NH₄+) exceeds the activation threshold value 412, the oxidation step starts again in the tank, first keeping the setpoint 400 at the fourth maximum value 402, and then varying its value as the concentration 410 of ammonium ion (NH₄+) present in tank varies.

However, it must understood that the third operating mode is also applicable to the oxidation tank 100 in case of a purification plant wherein the oxidation step and the denitrification step occur in two separated tanks.

Other embodiments of the method according to the invention may operate according to the third operating mode with the activation threshold value 412 that is not necessarily larger than the interruption threshold value 411; specifically the former may be also lower than or equal to the latter. In particular, when the activation threshold value 412 is equal to the interruption threshold value 411, the third operating mode coincides with the first operating mode.

Optionally, the apparatus according to the invention is further provided with sensors, connected to the electronic control unit 130, for detecting possible malfunctions and/or a deterioration of quality of the first probe 110 and/or of the second probe 120. In the case where such sensors detect an anomaly, the electronic control unit 130 may generate an alarm and/or a communication for signalling possible anomalies, for instance sending an SMS message or an email communication to an operator. Moreover, in the case where such sensors detect an anomaly, the electronic control unit 130 may control the power supply electrical apparatuses 140 according to a standard operating mode independent from the detections of the first probe 110 and/or second probe 120.

Other embodiments of the method according to the invention may have the electronic control unit 130 that, when it generates the setpoint of the oxygen concentration as a function of the concentration of ammonium ion (NH₄+) detected by the first probe 110, is configured to generate the former according to a relation between setpoint of the oxygen concentration and concentration of ammonium ion (NH₄+) different from a proportional relation; optionally, the type of relation according to which the electronic control unit 130 generates the setpoint of the oxygen concentration as a function of the concentration of ammonium ion (NH₄+) may be settable by an operator through the interface 131 of the electronic control unit 130.

Further embodiments of the method according to the invention may operate according to only one or two of the three operating modes disclosed above with reference to Figures 2-4.

Other embodiments of the method according to the invention may operate, rather than on the basis of the concentration of ammonium ion (NH₄+) detected by the first probe 110, on the basis of any detection of the oxygenation quality based on at least one value indicative of the concentration of at least one among ammonium ion (NH₄+), nitrite ion (NO₂-) and nitrate ion (NO₃-) detected by respective probes in the water of the oxidation tank 100; by way of example, and not by way of limitation, the detection of the oxygenation quality may be obtained by the electronic control unit 130 as a function of at least one value indicative of the concentration of at least one among ammonium ion (NH₄+), nitrite ion (NO₂-) and nitrate ion (NO₃-), such as for instance an algebraic sum or a weighted average of the detected concentrations of ammonium ion (NH₄+) and nitrite ion (NO₂-). Obviously, since the concentration of nitrate ion has a pattern opposite to the concentrations of ammonium ion, in the case where the detection of the oxygenation quality is based on a value indicative of the concentration of nitrate ion (NO₃-), the operational thresholds and the relations of the concentration of nitrate ion (NO₃-) with these for the three operating modes illustrated with reference to Figures 2-4 must be considered reversed; by way of example, in the third operating mode, when the concentration of nitrate ion is larger, instead of lower, than an interruption threshold value, the electronic control unit 130 controls the power supply electrical apparatuses 140 so as to interrupt the oxygenation, and when the concentration of nitrate ion gets lower than, rather than exceeding, an activation threshold value, the electronic control unit 130 controls the power supply electrical apparatuses 140 so as to drive the respective pumps 150 for supplying air or oxygen so as to follow the setpoint of the oxygen concentration that has a value inversely proportional to the concentration of nitrate ion.

It is possible to unitarily define the cases where the detection of the oxygenation quality is based on the concentration of ammonium ion (NH₄+) and the cases where it is based on the concentration of nitrate ion (NO₃-) by making generic reference to a detection of the oxygenation quality and related thresholds; whereby:
- in case of the first operating mode, when the detected oxygenation quality is larger than a first adjustment threshold, the pumps 150 are driven to supply air or oxygen so as to keep the setpoint 200 of the oxygen concentration equal to a first minimum value 201, while when the detected oxygenation quality is lower than the first adjustment threshold, the pumps 150 are driven to supply air or oxygen so as to follow the setpoint 200 of the oxygen concentration that increases as the detected oxygenation quality decreases;
- in case of the second operating mode, when the detected oxygenation quality is larger than a second adjustment threshold (possibly equal to the first adjustment threshold), the electronic control unit 130 controls the power supply electrical apparatuses 140 so as to drive the respective pumps 150 according to ON-OFF cycles of oxygenation illustrated with reference to Figure 3, while when the detected oxygenation quality is lower than the second adjustment threshold, the electronic control unit 130 controls the power supply electrical apparatuses 140 so as to drive the respective pumps 150 for supplying air or oxygen so as to follow the setpoint 300 of the oxygen concentration that increases as the detected oxygenation quality decreases;
- in case of the third operating mode, when the detected oxygenation quality is larger than an interruption threshold (possibly equal to the first or second adjustment threshold), the electronic control unit 130 controls the power supply electrical apparatuses 140 so as to interrupt the oxygenation, whereby the setpoint 400 of the oxygen concentration is equal to the third minimum value 401, while when the detected oxygenation quality gets lower than an activation threshold, lower than the interruption threshold, optionally lower than the first and/or second adjustment threshold, the electronic control unit 130 controls the power supply electrical apparatuses 140 so as to drive the respective pumps 150 for supplying air or oxygen so as to follow the setpoint 400 of the oxygen concentration that increases as the detected oxygenation quality decreases.

Also in the embodiments of the method according to the invention wherein the detection of the oxygenation quality is based on the concentration of nitrate ion (NO₃-), the actual oxygen concentration (O₂) detected by the second probe 120 is used by the electronic control unit 130 for controlling the power supply electrical apparatuses 140 so as to drive the respective pumps 150 for making the dispensers 160 deliver air or oxygen so as to make such actual oxygen concentration detected by the second probe 120 tend to the setpoint generated by the electronic control unit 130.

Optionally, the electronic control unit 130 is configured to store in a memory detected data (e.g. data related to the concentration of ammonium ion (NH₄+) detected by the first probe 110, to the oxygen concentration detected by the second probe 120, and to the temperature) and data related to operation parameters of the apparatus (e.g. data related to the setpoint of the oxygen concentration and to the control of the power supply electrical apparatuses 140).

Obviously, the apparatus according to the invention may be also applied to an already existing purification plant comprising an oxidation tank.

As previously stated, the apparatus according to the invention is simple to install. In fact, once that the detection probes in the oxidation tank and the electronic control unit 130 (so that it is connected to the electrical apparatuses 140) have been installed, it is sufficient to execute an optional quick setting of the operational thresholds and maximum and minimum values on which the operating modes of the method executed by the electronic control unit 130 of the apparatus according to the invention are based. Afterwards, the apparatus according to the invention is capable to modulate, by intervening on the electrical apparatuses 140 (e.g. inverters), the dissolved oxygen concentration within a range optionally freely settable as a function of the concentration of ammonium ion and/or nitrite ion and/or nitrate ion. The operating modes of the method according to the invention are advantageously activable in conditions of low content of polluting substances.

## Claims

1. Method for controlling a wastewater biological treatment plant, wherein the method is executed by an electronic control unit, comprising the following steps:
A. receiving a detection of an oxygenation quality of water to treat, the detection of the oxygenation quality being based on at least one value indicative of concentration (210; 310; 410) of at least one among ammonium ion (NH₄+), nitrite ion (NO₂-) and nitrate ion (NO₃-) in the water to treat,
B. receiving a detection of a concentration of oxygen (O₂) dissolved in the water to treat,
C. dynamically generating the oxygen concentration setpoint (200; 300; 400) as a function of the detection of the oxygenation quality,
D. controlling one or more electrical apparatuses (140) which control a power supply to one or more respective electric motors for driving respective pumps (150) configured to activate an air or oxygen supply in the water to treat so as to cause the detected oxygen concentration to tend to an oxygen concentration setpoint (200; 300; 400),
the method being **characterised in that** step C generates the oxygen concentration setpoint (200; 300; 400) according to at least one of the following operating modes:
- a first operating mode wherein, when the detected oxygenation quality is higher than a first adjustment threshold, the oxygen concentration setpoint (200) is equal to a first minimum value (201) and, when the detected oxygenation quality is lower than the first adjustment threshold, the oxygen concentration setpoint (200) increases as the detected oxygenation quality decreases according to a first relation;
- a second operating mode wherein, when the detected oxygenation quality is higher than a second adjustment threshold, the setpoint (300) is generated according to a periodic square wave between a second minimum value (301), for a first time interval (303), and a second maximum value (302), for a second time interval (304), and, when the detected oxygenation quality is lower than the second adjustment threshold, the oxygen concentration setpoint (300) increases as the detected oxygenation quality decreases according to a second relation;
- a third operating mode wherein, when the detected oxygenation quality is higher than an interruption threshold, the oxygen concentration setpoint (400) is equal to a third minimum value (401), and, when the detected oxygenation quality is lower than an activation threshold, the oxygen concentration setpoint (400) increases as the detected oxygenation quality decreases according to a third relation.

2. Method according to claim 1, **characterised in that** in said first relation the oxygen concentration setpoint (200) is not larger than a first maximum value (202), that is optionally adjustable, wherein the second maximum value (302) is optionally equal to the first maximum value (202).

3. Method according to claim 1 or 2, wherein at least one between the first adjustment threshold and the first minimum value (201) is adjustable.

4. Method according to any one of the preceding claims, **characterised in that** in said second relation the oxygen concentration setpoint (300) is not higher than a third maximum value, that is optionally equal to the second maximum value (302), more optionally adjustable, wherein said second relation is optionally equal to said first relation.

5. Method according to any one of the preceding claims, wherein the second adjustment threshold is equal to the first adjustment threshold, wherein the second minimum value (301) is lower than the first minimum value (201), optionally equal to zero, wherein the second time interval (304) is shorter than the first time interval (303), wherein at least one between the second adjustment threshold and the second minimum value (301) is adjustable, and wherein at least one between the first time interval (303) and the second time interval (304) is adjustable.

6. Method according to any one of the preceding claims, **characterised in that** in said third relation the oxygen concentration setpoint (400) is not larger than a fourth maximum value (402), that is optionally equal to the first maximum value (202) or the second maximum value (302) or the third maximum value, more optionally adjustable, wherein said third relation is optionally equal to said first relation or said second relation.

7. Method according to any one of the preceding claims, wherein the interruption threshold is equal to the first or second adjustment threshold, wherein the third minimum value (401) is lower than the first minimum value (201), optionally equal to zero, wherein the activation threshold is lower than the interruption threshold, optionally lower than the first adjustment threshold and/or the second adjustment threshold, and wherein at least one between the interruption threshold and the third minimum value (401) is adjustable.

8. Method according to any one of the preceding claims, **characterised in that** step C generates the oxygen concentration setpoint (200; 300; 400) according to two or three of said three operating modes in a selectable way.

9. Method according to any one of the preceding claims, **characterised in that** at least one among said first relation, said second relation and said third relation is selectable from a group comprising an inversely proportional relation between oxygen concentration setpoint (200; 300; 400) and detected oxygenation quality.

10. Method according to any one of the preceding claims, **characterised in that** the detection of the oxygenation quality is based on the concentration (210; 310; 410) of ammonium ion (NH₄+) in the water to treat or on the concentration of nitrate ion (NO₃-) in the water to treat.

11. Apparatus controlling a wastewater biological treatment plant comprising an electronic control unit (130) configured to be connected to first detecting means (110), configured to detect a concentration of at least one among ammonium ion (NH₄+), nitrite ion (NO₂-) and nitrate ion (NO₃-) in water to treat, and to second detecting means (120) configured to detect a concentration of oxygen (O₂) dissolved in the water to treat, the electronic control unit (130) being configured to be connected to and to control one or more electrical apparatuses (140) which control a power supply to one or more respective electric motors for driving respective pumps (150) configured to activate an air or oxygen supply in the water to treat, the apparatus being **characterised in that** the electronic control unit (130) is configured to execute the method for controlling a wastewater biological treatment plant according to any one of claims 1 to 10.

12. Apparatus according to claim 11, **characterised in that** the electronic control unit (130) is configured to receive from said first detecting means (110) an optical detection of a concentration of at least one among ammonium ion (NH₄+), nitrite ion (NO₂-) and nitrate ion (NO₃-) in the water to treat and a detection of temperature of the water to treat, the electronic control unit (130) being configured to compensate said optical detection depending on the detection of temperature of the water to treat.

13. Apparatus according to claim 11 or 12, **characterised in that** it is provided with one or more sensors, connected to the electronic control unit (130), configured to detect possible malfunctions and/or a deterioration of quality of said first detecting means (110) and/or a deterioration of quality of said second detecting means (120), the electronic control unit (130) being configured to generate an alarm and/or a signalling communication in the case where said one or more sensors detect an anomaly.

14. Apparatus according to any one of claims 11 to 13, **characterised in that** the electronic control unit (130) is configured to store in a memory data detected by said first detecting means (110) and/or said second detecting means (120) and data related to operation parameters of the apparatus.

15. Wastewater biological treatment plant, comprising an oxidation tank (100) configured to contain water to treat, which tank is provided with first detecting means (110), for detecting a concentration of at least one among ammonium ion (NH₄+), nitrite ion (NO₂-) and nitrate ion (NO₃-) in water to treat, and with second detecting means (120), for detecting a concentration of oxygen (O₂) dissolved in the water to treat, the plant further comprising one or more electrical apparatuses (140) controlling a power supply to one or more respective electric motors for driving respective pumps (150) configured to activate an air or oxygen supply in the water to treat, the plant being **characterised in that** it comprises the controlling apparatus according to any one of claims 11 to 14, the electronic control unit (130) of which is connected to said first detecting means (110) and said second detecting means (120), the electronic control unit (130) being connected to and controlling said one or more electrical apparatuses (140), wherein the electronic control unit (130) is configured to execute the method for controlling a wastewater biological treatment plant according to any one of claims 1 to 10.

## Patentansprüche

1. Verfahren zur Steuerung einer biologischen Kläranlage, wobei das Verfahren von einer elektronischen Steuereinheit ausgeführt wird, umfassend die folgenden Schritte:
A. Empfangen einer Erfassung einer Oxygenierungsqualität von zu behandelndem Wasser, wobei die Erfassung der Oxygenierungsqualität auf mindestens einem Wert basiert, der die Konzentration (210; 310; 410) von mindestens einem ausgewählt aus Ammoniumionen (NH₄+), Nitritionen (NO₂-) und Nitrationen (NO₃-) in dem zu behandelnden Wasser anzeigt,
B. Empfang einer Erfassung einer Konzentration von im zu behandelnden Wasser gelöstem Sauerstoff (O₂),
C. dynamisches Erzeugen des Sauerstoffkonzentrations-Sollwertes (200; 300; 400) in Abhängigkeit von der Erfassung der Oxygenierungsqualität,
D. Steuern eines oder mehrerer elektrischer Geräte (140), die eine Stromversorgung zu einem oder mehreren jeweiligen Elektromotoren zum Antreiben jeweiliger Pumpen (150) steuern, die so konfiguriert sind, dass sie eine Luft- oder Sauerstoffzufuhr in dem zu behandelnden Wasser aktivieren, um zu bewirken, dass die erfasste Sauerstoffkonzentration zu einem Sauerstoffkonzentrations-Sollwert (200; 300; 400) tendiert,
wobei das Verfahren **dadurch gekennzeichnet ist, dass** Schritt C den Sauerstoffkonzentrations-Sollwert (200; 300; 400) gemäß mindestens einem der folgenden Betriebsmodi erzeugt:
- einen ersten Betriebsmodus, bei dem, wenn die erfasste Oxygenierungsqualität höher als ein erster Einstellschwellenwert ist, der Sauerstoffkonzentrations-Sollwert (200) gleich einem ersten Minimalwert (201) ist, und, wenn die erfasste Oxygenierungsqualität niedriger als der erste Einstellschwellenwert ist, der Sauerstoffkonzentrations-Sollwert (200) gemäß einer ersten Beziehung zunimmt, wenn die erfasste Oxygenierungsqualität abnimmt;
- einen zweiten Betriebsmodus, bei dem, wenn die erfasste Oxygenierungsqualität höher als ein zweiter Einstellschwellenwert ist, der Sollwert (300) gemäß einer periodischen Rechteckwelle zwischen einem zweiten Minimalwert (301) für ein erstes Zeitintervall (303) und einem zweiten Maximalwert (302) für ein zweites Zeitintervall (304) erzeugt wird, und, wenn die erfasste Oxygenierungsqualität niedriger als der zweite Einstellschwellenwert ist, der Sauerstoffkonzentrations-Sollwert (300) zunimmt, während die erfasste Oxygenierungsqualität gemäß einer zweiten Beziehung abnimmt;
- inen dritten Betriebsmodus, bei dem, wenn die erfasste Oxygenierungsqualität höher als ein Unterbrechungsschwellenwert ist, der Sauerstoffkonzentrations-Sollwert (400) gleich einem dritten Minimalwert (401) ist, und, wenn die erfasste Oxygenierungsqualität niedriger als ein Aktivierungsschwellenwert ist, der Sauerstoffkonzentrations-Sollwert (400) zunimmt, wenn die erfasste Oxygenierungsqualität gemäß einer dritten Beziehung abnimmt.

2. Verfahren nach Anspruch 1, **dadurch gekennzeichnet, dass** in der ersten Relation der Sauerstoffkonzentrations-Sollwert (200) nicht größer ist als ein erster Maximalwert (202), der optional einstellbar ist, wobei der zweite Maximalwert (302) optional gleich dem ersten Maximalwert (202) ist.

3. Verfahren nach Anspruch 1 oder 2, wobei mindestens einer zwischen der ersten Einstellschwelle und dem ersten Minimalwert (201) einstellbar ist.

4. Verfahren nach einem der vorhergehenden Ansprüche, **dadurch gekennzeichnet, dass** in der zweiten Beziehung der Sauerstoffkonzentrations-Sollwert (300) nicht höher ist als ein dritter Maximalwert, der optional gleich dem zweiten Maximalwert (302) ist, der optional einstellbarer ist, wobei die zweite Beziehung optional gleich der ersten Beziehung ist.

5. Verfahren nach einem der vorhergehenden Ansprüche, wobei die zweite Einstellschwelle gleich der ersten Einstellschwelle ist, wobei der zweite Minimalwert (301) kleiner als der erste Minimalwert (201) ist, optional gleich Null, wobei das zweite Zeitintervall (304) kürzer als das erste Zeitintervall (303) ist, wobei mindestens eines zwischen der zweiten Einstellschwelle und dem zweiten Minimalwert (301) einstellbar ist, und wobei mindestens eines zwischen dem ersten Zeitintervall (303) und dem zweiten Zeitintervall (304) einstellbar ist.

6. Verfahren nach einem der vorhergehenden Ansprüche, **dadurch gekennzeichnet, dass** in der dritten Relation der Sauerstoffkonzentrations-Sollwert (400) nicht größer ist als ein vierter Maximalwert (402), der wahlweise gleich dem ersten Maximalwert (202) oder dem zweiten Maximalwert (302) oder dem dritten Maximalwert ist, wobei die dritte Relation wahlweise gleich der ersten Relation oder der zweiten Relation ist.

7. Verfahren nach einem der vorhergehenden Ansprüche, wobei die Unterbrechungsschwelle gleich der ersten oder zweiten Einstellschwelle ist, wobei der dritte Minimalwert (401) kleiner als der erste Minimalwert (201), optional gleich Null ist, wobei die Aktivierungsschwelle kleiner als die Unterbrechungsschwelle, optional kleiner als die erste Einstellschwelle und/oder die zweite Einstellschwelle ist, und wobei mindestens einer zwischen der Unterbrechungsschwelle und dem dritten Minimalwert (401) einstellbar ist.

8. Verfahren nach einem der vorhergehenden Ansprüche, **dadurch gekennzeichnet, dass** Schritt C den Sauerstoffkonzentrations-Sollwert (200; 300; 400) gemäß zwei oder drei der drei Betriebsarten in wählbarer Weise erzeugt.

9. Verfahren nach einem der vorhergehenden Ansprüche, **dadurch gekennzeichnet, dass** mindestens eine aus der ersten Relation, der zweiten Relation und der dritten Relation aus einer Gruppe auswählbar ist, die eine umgekehrt proportionale Relation zwischen Sauerstoffkonzentrations-Sollwert (200; 300; 400) und erfasster Oxygenierungsqualität umfasst.

10. Verfahren nach einem der vorhergehenden Ansprüche, **dadurch gekennzeichnet, dass** die Erfassung der Oxygenierungsqualität auf der Konzentration (210; 310; 410) von Ammoniumionen (NH₄+) im zu behandelnden Wasser oder auf der Konzentration von Nitrationen (NO₃-) im zu behandelnden Wasser basiert.

11. Vorrichtung zur Steuerung einer biologischen Abwasserbehandlungsanlage, die eine elektronische Steuereinheit (130) umfasst, die so konfiguriert ist, dass sie mit einer ersten Erfassungseinrichtung (110) verbunden ist, die so konfiguriert ist, dass sie eine Konzentration von mindestens einem von Ammoniumionen (NH₄+), Nitritionen (NO₂-) und Nitrat-Ionen (NO₃-) in dem zu behandelnden Wasser, und zu einer zweiten Erfassungseinrichtung (120), die so konfiguriert ist, dass sie eine Konzentration von in dem zu behandelnden Wasser gelöstem Sauerstoff (O₂) erfasst, wobei die elektronische Steuereinheit (130) so konfiguriert ist, dass sie mit einer oder mehreren elektrischen Vorrichtungen (140) verbunden ist und diese steuert, die eine Stromversorgung zu einem oder mehreren jeweiligen Elektromotoren zum Antreiben jeweiliger Pumpen (150) steuern, die so konfiguriert sind, dass sie eine Luft- oder Sauerstoffversorgung in dem zu behandelnden Wasser aktivieren, die Vorrichtung **dadurch gekennzeichnet ist, dass** die elektronische Steuereinheit (130) konfiguriert ist, um das Verfahren zur Steuerung einer biologischen Abwasserbehandlungsanlage nach einem der Ansprüche 1 bis 10 auszuführen.

12. Vorrichtung nach Anspruch 11, **dadurch gekennzeichnet, dass** die elektronische Steuereinheit (130) so konfiguriert ist, dass sie von der ersten Erfassungseinrichtung (110) eine optische Erfassung einer Konzentration von mindestens einem von Ammoniumionen (NH₄+), Nitritionen (NO₂-) und Nitrationen (NO₃-) in dem zu behandelnden Wasser und eine Erfassung der Temperatur des zu behandelnden Wassers, wobei die elektronische Steuereinheit (130) so konfiguriert ist, dass sie die optische Erfassung in Abhängigkeit von der Erfassung der Temperatur des zu behandelnden Wassers kompensiert.

13. Vorrichtung nach Anspruch 11 oder 12, **dadurch gekennzeichnet, dass** sie mit einem oder mehreren Sensoren versehen ist, die mit der elektronischen Steuereinheit (130) verbunden und so konfiguriert sind, dass sie mögliche Fehlfunktionen und/oder eine Qualitätsverschlechterung der ersten Erfassungseinrichtung (110) und/oder eine Qualitätsverschlechterung der zweiten Erfassungseinrichtung (120) erfassen, wobei die elektronische Steuereinheit (130) so konfiguriert ist, dass sie einen Alarm und/oder eine Signalisierungskommunikation in dem Fall erzeugt, in dem der eine oder die mehreren Sensoren eine Anomalie erfassen.

14. Vorrichtung nach einem der Ansprüche 11 bis 13, **dadurch gekennzeichnet, dass** die elektronische Steuereinheit (130) so konfiguriert ist, dass sie in einem Speicher Daten speichert, die von der ersten Erfassungseinrichtung (110) und/oder der zweiten Erfassungseinrichtung (120) und Daten, die sich auf Betriebsparameter des Geräts beziehen.

15. Biologische Abwasserbehandlungsanlage, die einen Oxidationstank (100) umfasst, der so konfiguriert ist, dass er zu behandelndes Wasser enthält, wobei der Tank mit einer ersten Erfassungseinrichtung (110) zum Erfassen einer Konzentration von mindestens einem von Ammoniumionen (NH₄+), Nitritionen (NO₂-) und Nitrationen (NO₃-) im zu behandelnden Wasser und mit einer zweiten Erfassungseinrichtung (120) zum Erfassen einer Konzentration von in dem zu behandelnden Wasser gelöstem Sauerstoff (O₂) versehen ist, die Anlage ferner eine oder mehrere elektrische Vorrichtungen (140) umfasst, die eine Stromversorgung zu einem oder mehreren jeweiligen Elektromotoren zum Antreiben jeweiliger Pumpen (150) steuern, die so konfiguriert sind, dass sie eine Luft- oder Sauerstoffzufuhr in dem zu behandelnden Wasser aktivieren, wobei die Anlage **dadurch gekennzeichnet ist, dass** sie die Steuervorrichtung nach einem der Ansprüche 11 bis 14 umfasst, deren elektronische Steuereinheit (130) mit der ersten Erfassungseinrichtung (110) und der zweiten Erfassungseinrichtung (120) verbunden ist, wobei die elektronische Steuereinheit (130) mit der einen oder den mehreren elektrischen Vorrichtungen (140) verbunden ist und diese steuert, wobei die elektronische Steuereinheit (130) so konfiguriert ist, dass sie das Verfahren zur Steuerung einer biologischen Abwasserbehandlungsanlage nach einem der Ansprüche 1 bis 10 ausführen kann.

## Revendications

1. Procédé de contrôle d'une station de traitement biologique des eaux usées, dans lequel le procédé est exécuté par une unité de contrôle électronique, comprenant les étapes suivantes :
A. réceptionner une détection de qualité d'oxygénation d'eau à traiter, la détection de la qualité d'oxygénation étant basée sur au moins une valeur indicative de la concentration (210 ; 310 ; 410) d'au moins l'un parmi l'ion ammonium (NH₄+), l'ion nitrite (NO₂-) et l'ion nitrate (NO₃-) dans l'eau à traiter ;
B. réceptionner une détection de concentration d'oxygène (O₂) dissout dans l'eau à traiter ;
C. générer dynamiquement la consigne de concentration en oxygène (200 ; 300 ; 400) en fonction de la détection de la qualité d'oxygénation;
D. contrôler un ou plusieurs appareils électriques (140) qui contrôlent une alimentation électrique d'un ou plusieurs moteurs électriques respectifs pour entraîner des pompes respectives (150) configurées pour activer une alimentation en air ou en oxygène dans l'eau à traiter de manière à faire tendre la concentration d'oxygène détectée vers une consigne de concentration en oxygène (200 ; 300 ; 400),
le procédé étant **caractérisé en ce que** l'étape C génère la consigne de concentration en oxygène (200 ; 300 ; 400) selon au moins l'un des modes de fonctionnement suivants :
- un premier mode de fonctionnement dans lequel, lorsque la qualité d'oxygénation détectée est supérieure à un premier seuil de réglage, la consigne de concentration en oxygène (200) est égale à une première valeur minimale (201) et, lorsque la qualité d'oxygénation détectée est inférieure au premier seuil de réglage, la consigne de concentration en oxygène (200) augmente au fur et à mesure que la qualité d'oxygénation détectée diminue selon une première relation ;
- un deuxième mode de fonctionnement dans lequel, lorsque la qualité d'oxygénation détectée est supérieure à un deuxième seuil de réglage, la consigne (300) est générée selon une onde carrée périodique entre une deuxième valeur minimale (301), pendant un premier intervalle de temps (303), et une seconde valeur maximale (302), pendant un second intervalle de temps (304), et, lorsque la qualité d'oxygénation détectée est inférieure au second seuil de réglage, la consigne de concentration en oxygène (300) augmente à mesure que la qualité d'oxygénation détectée diminue selon une seconde relation ;
- un troisième mode de fonctionnement dans lequel, lorsque la qualité d'oxygénation détectée est supérieure à un seuil d'interruption, la consigne de concentration en oxygène (400) est égale à une troisième valeur minimale (401), et, lorsque la qualité d'oxygénation détectée est inférieure à un seuil d'activation, la consigne de concentration en oxygène (400) augmente au fur et à mesure que la qualité d'oxygénation détectée diminue selon une troisième relation.

2. Procédé selon la revendication 1, **caractérisé en ce que** dans ladite première relation la consigne de concentration en oxygène (200) n'est pas supérieure à une première valeur maximale (202), qui est optionnellement réglable, où la deuxième valeur maximale (302) est optionnellement égale à la première valeur maximale (202).

3. Procédé selon la revendication 1 ou 2, dans lequel au moins l'un des premier seuil de réglage et première valeur minimale (201) est réglable.

4. Procédé selon l'une quelconque des revendications précédentes, **caractérisé en ce que** dans ladite deuxième relation la consigne de concentration en oxygène (300) n'est pas supérieure à une troisième valeur maximale, qui est optionnellement égale à la deuxième valeur maximale (302), encore plus optionnellement réglable, où ladite seconde relation est optionnellement égale à ladite première relation.

5. Procédé selon l'une quelconque des revendications précédentes, dans lequel le deuxième seuil de réglage est égal au premier seuil de réglage, dans lequel la deuxième valeur minimale (301) est inférieure à la première valeur minimale (201), optionnellement égale à zéro, dans laquelle le deuxième intervalle de temps (304) est plus court que le premier intervalle de temps (303), dans lequel au moins l'un des deuxième seuil de réglage et deuxième valeur minimale (301) est réglable, et dans lequel au moins l'un des premier intervalle de temps (303) et deuxième intervalle de temps (304) est réglable.

6. Procédé selon l'une quelconque des revendications précédentes, **caractérisé en ce que** dans ladite troisième relation la consigne de concentration en oxygène (400) n'est pas supérieure à une quatrième valeur maximale (402), optionnellement égale à la première valeur maximale (202) ou la deuxième valeur maximale (302) ou la troisième valeur maximale, encore plus optionnellement réglable, où ladite troisième relation est optionnellement égale à ladite première relation ou à ladite deuxième relation.

7. Procédé selon l'une quelconque des revendications précédentes, dans lequel le seuil d'interruption est égal au premier ou au deuxième seuil de réglage, dans lequel la troisième valeur minimale (401) est inférieure à la première valeur minimale (201), optionnellement égale à zéro, où le seuil d'activation est inférieur au seuil d'interruption, optionnellement inférieur au premier seuil de réglage et/ou au deuxième seuil de réglage, et où au moins l'un des seuil d'interruption et troisième valeur minimale (401) est réglable.

8. Procédé selon l'une quelconque des revendications précédentes, **caractérisé en ce que** l'étape C génère la consigne de concentration en oxygène (200; 300; 400) selon deux ou trois desdits trois modes de fonctionnement de manière sélectionnable.

9. Procédé selon l'une quelconque des revendications précédentes, **caractérisé en ce qu'**au moins l'une desdites première relation, deuxième relation et troisième relation est sélectionnable dans un groupe comprenant une relation inversement proportionnelle entre la consigne de concentration en oxygène (200; 300; 400) et la qualité de l'oxygénation détectée.

10. Procédé selon l'une quelconque des revendications précédentes, **caractérisé en ce que** la détection de la qualité d'oxygénation est basée sur la concentration (210; 310; 410) en ion ammonium (NH₄+) dans l'eau à traiter ou sur la concentration d'ion nitrate (NO₃-) dans l'eau à traiter.

11. Appareil contrôlant une station de traitement biologique des eaux usées comprenant une unité de commande électronique (130) configurée pour être connectée à un premier moyen de détection (110), configuré pour détecter une concentration d'au moins l'un parmi l'ion ammonium (NH₄+), l'ion nitrite (NO₂-) et l'ion nitrate (NO₃-) dans l'eau à traiter, et à un second moyen de détection (120) configuré pour détecter une concentration d'oxygène (O₂) dissout dans l'eau à traiter, l'unité de commande électronique (130) étant configurée pour être connectée à, et pour commander, un ou plusieurs appareils électriques (140) qui commandent une alimentation électrique d'un ou plusieurs moteurs électriques respectifs pour entraîner des pompes respectives (150) configurées pour activer une alimentation en air ou en oxygène dans l'eau à traiter, l'appareil étant **caractérisé en ce que** l'unité de commande électronique (130) est configurée pour exécuter le procédé de contrôle d'une station de traitement biologique des eaux usées selon l'une quelconque des revendications 1 à 10.

12. Appareil selon la revendication 11, **caractérisé en ce que** l'unité de commande électronique (130) est configurée pour recevoir dudit premier moyen de détection (110) une détection optique d'une concentration d'au moins l'un parmi l'ion ammonium (NH₄+), l'ion nitrite (NO₂-) et d'ions nitrate (NO₃-) dans l'eau à traiter et une détection de température de l'eau à traiter, l'unité de commande électronique (130) étant configurée pour compenser ladite détection optique en fonction de la détection de température de l'eau à traiter.

13. Appareil selon la revendication 11 ou 12, **caractérisé en ce qu'**il est pourvu d'un ou plusieurs capteurs, reliés à l'unité électronique de commande (130), configurés pour détecter d'éventuels dysfonctionnements et/ou une détérioration de la qualité dudit premier moyen de détection (110) et/ou une détérioration de la qualité dudit second moyen de détection (120), l'unité de commande électronique (130) étant configurée pour générer une alarme et/ou une communication de signalisation dans le cas où lesdits un ou plusieurs capteurs détectent une anomalie.

14. Appareil selon l'une quelconque des revendications 11 à 13, **caractérisé en ce que** l'unité électronique de commande (130) est configurée pour stocker dans une mémoire des données détectées par ledit premier moyen de détection (110) et/ou ledit second moyen de détection (120) et des données relatives aux paramètres de fonctionnement de l'appareil.

15. Station de traitement biologique des eaux usées, comprenant une cuve d'oxydation (100) configurée pour contenir de l'eau à traiter, laquelle cuve est pourvue d'un premier moyen de détection (110), pour détecter une concentration d'au moins l'un parmi l'ion ammonium (NH₄+), l'ion nitrite (NO₂-) et l'ion nitrate (NO₃-) dans l'eau à traiter, et d'un second moyen de détection (120), pour détecter une concentration d'oxygène (O₂) dissous dans l'eau à traiter, l'installation comprenant en outre un ou plusieurs appareils électriques (140) commandant une alimentation électrique d'un ou plusieurs moteurs électriques respectifs pour entraîner des pompes respectives (150) configurées pour activer une alimentation en air ou en oxygène dans l'eau à traiter, la station étant **caractérisée en ce qu'**elle comprend l'appareil de contrôle selon l'une quelconque des revendications 11 à 14, dont l'unité de commande électronique (130) est connectée audit premier moyen de détection (110) et audit second moyen de détection (120), l'unité de commande électronique (130) étant connectée audit et commandant ledit un ou plusieurs appareils électriques (140), dans lesquels l'unité de commande électronique (130) est configurée pour exécuter le procédé de contrôle d'une station de traitement biologique des eaux usées selon l'une quelconque des revendications 1 à 10.
